# EUROPEAN PATENT APPLICATION

(11) **EP 2 107 228 A1**
(43) Date of publication of application: **07.10.2009**
(21) Application number: 08006861.2
(22) Date of filing: 04.04.2008
(51) Int. Cl.: F02C 7/32

(54) **Aircraft power plant comprising engagable pumps and method of operation**

(71) Applicant: Eaton Fluid Power GmbH, 76532 Baden-Baden (DE)
(72) Inventor: Kahl, Klaus Dieter, 76532 Baden-Baden (DE)
(74) Representative: Newell, William Joseph

(57) **Abstract**

An aircraft includes several power plants (30) each of which is connected to two engine driven pumps (10) via respective clutch arrangements (14). During take off, landing and other conditions of high hydraulic demand both pumps are driven. During cruise one pump may be disengaged thereby reducing the period for which the pump is driven and thereby extending its service life and reducing the load on the power plant.

## Description

This invention relates to aircraft power plant arrangements, to aircraft incorporating such arrangements and to methods of operating such aircraft.

Much of the power required for operation of an aircraft before and during flight is delivered hydraulically. For example, the undercarriage is raised and lowered hydraulically, the aircraft nose wheel is steered hydraulically, the aircraft control surfaces are typically driven hydraulically etc. The demand for hydraulic power varies considerably during the various operating regimes of the aircraft and, in conventional arrangements, the engine driven pumps are variable displacement swash plate piston pumps that deliver the required flow. These pumps are constantly connected to the aircraft engine gearbox via a drive shaft which is fitted into the splines of the aircraft engine gearbox. It is usual to provide at least two engine driven pumps per engine.

On the Airbus A380, it is known to provide an arrangement in which an engine driven pump may be disconnected from the aircraft gearbox whilst the aircraft is in operation. However, such pumps cannot be re-engaged with the engine whilst it is running. Instead re-engagement must be done on the ground with a special tool with the engine not running. The reason for this is specifically to ensure that it is not possible to re-engage the pump from within the cockpit. In doing so this complies with safety legislation that allows the aircraft to be cleared for takeoff with, say, seven out of eight of the pumps operational provided that the non-operational pump is safely isolated from the engine.

It is also known from US2006/0260323 to provide a clutch arrangement between the engine and a single engine driven pump to allow the engine driven pump and other engine components selectively to be driven by a separate turbine for safety and emergency purposes.

Conventionally, during periods of low hydraulic demand an engine driven pump may be depressurised by actuation of a depressurising valve which essentially depressurises the pump, allowing a blocking valve to close to isolate the pump from the external hydraulic system, and reducing the yoke angle of the swash plate to nearly zero. However, even in such low load conditions, the engine driven pump is still rotating and this has to be taken into account when assessing the service life of the unit, which is based on the mean time between failures (MTBF).

We have developed a system which ensures that the demands are fully met during periods of both high hydraulic demand and low hydraulic demand but which enables a pump to be uncoupled from the power plant during cruise or other low hydraulic demand conditions, thereby reducing the operational duration of the pump. In this way, the service life of a suite of engine driven pumps on board an aircraft may be considerably extended by selectively switching out pumps for long periods when the engine is cruising and the hydraulic demand is low (typically 80% of the flight time), and this considerably saves on maintenance. Furthermore, because the pumps are uncoupled from the drive rather than being driven at low yoke angles, it is no longer necessary to provide the depressurising valve and blocking valve. This provides a cost and weight reduction that can at least partially offset the cost and weight of the equipment for providing selective decoupling of the pumps. Moreover the ability to disconnect one or more engine driven pumps for 80% of the flight time allows a significant fuel saving that confers significant environmental advantages.

Accordingly, in one aspect, this invention provides an aircraft, including :-
an aircraft power plant;
at least two engine driven pumps for being driven by said power plant;
respective clutch arrangements associated with each engine driven pump and each selectively actuable to couple or uncouple the drive to the associated engine driven pump, and
a remote switch means in the aircraft cockpit for allowing said clutch arrangements selectively to be engaged and disengaged during aircraft flight.

In this manner, the drive to the engine driven pumps may be selectively engaged and disengaged during flight from the aircraft cockpit so as to rotate the periods of operation of the pumps and thereby share the operating time and therefore considerably increase the service intervals for the pumps.

The clutch arrangements may comprise any suitable arrangement for engaging and disengaging drive to the pump. Such arrangements include mechanically operated clutch arrangements and hydraulically operated clutch arrangements.

Preferably each engine driven pump is a variable displacement pump with the outlet thereof connected to an output port without a depressurising valve or blocking valve.

In another aspect, this invention provides an aircraft power plant including at least two engine driven pumps for being driven by said power plant, respective clutch arrangements associated with each engine driven pump and each selectively actuable to couple or uncouple the drive to the associated engine driven pump, and a remote switch means for allowing selective engagement and disengagement of clutch arrangements during aircraft flight.

In another aspect, this invention provides a method for operating an aircraft which includes at least one power plant with at least two engine driven pumps for receiving power from said power plant via respective clutch arrangements, which method comprises operating said clutch arrangements so that a given number of said engine driven pumps is driven by the or each power plant during take off and landing and other conditions of high hydraulic demand, but disengaging at least one of said engine driven pumps during cruise conditions or other conditions of lower hydraulic demand, thereby to extend the service life of said pumps.

Whilst the invention has been described above, it extends to any inventive feature set out above or in the following description or claims.

An embodiment of the invention will now be described by way of example only, reference being made to the accompanying drawings in which :-
Figure 1 is a diagram of an engine driven pump modified in accordance with this invention and
Figure 2 is a schematic view of the starboard wing and part of the fuselage of an aircraft in accordance with this invention.

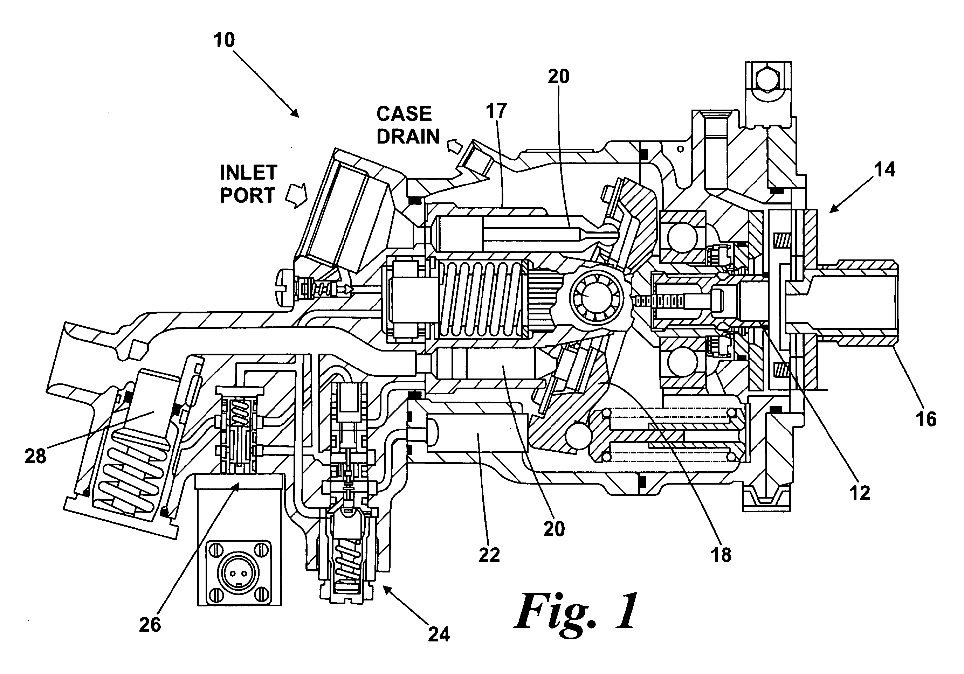

Referring initially to Figure 1, the engine driven pump illustrated therein is of known form but modified to include a clutch arrangement to allow it to be coupled and uncoupled from the engine gearbox. In brief, the engine driven pump 10 is a variable displacement pump having a drive shaft 12 which is connected via a pilot operated engageable and disengageable clutch 14 to a splined shaft 16 that is coupled to the engine gearbox. In this embodiment the clutch is of mechanical form similar in principle to that used on automobiles, with plates that disengage to uncouple the drive and engage to couple the drive. The driveshaft 12 rotates a cylinder block 17 with respect to a swash plate or yoke 18 that is rotationally fixed within the external housing. The yoke angle of the yoke 18 can be varied to adjust the stroke and thus displacement of a number of pistons 20 disposed on the cylinder block radially around the rotational axis of the yoke. An actuator piston 22 sets the yoke angle and thus determines the displacement of the pump. During normal operation the actuator piston 22 is controlled by a pressure compensator valve 24 that moves the actuator piston 22 to ensure that the outlet pressure is maintained.

Also shown in Figure 1 is a depressurising valve 26 and an outlet blocking valve 28 that are used in conventional arrangements to isolate the pump 10 from the external hydraulic system and to set the yoke angle to nearly zero and provide zero delivery, when the pump is depressurised. Although shown in Figure 1, the depressurising valve and the outlet blocking valve are not required in preferred arrangements of the invention and so these components may be removed with a consequent saving in weight and cost.

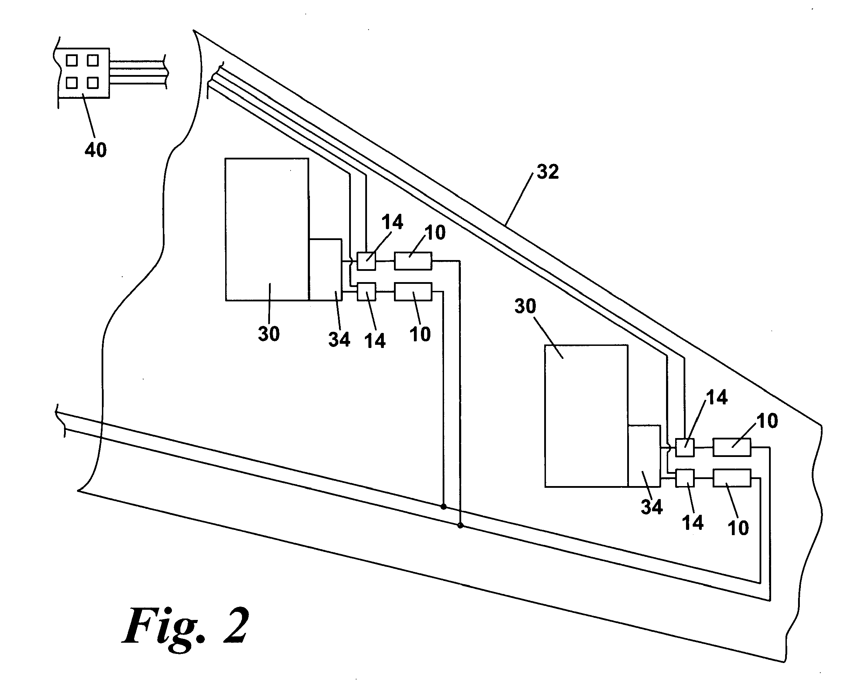

Referring now to Figure 2, there is shown a part of a starboard side of a four engine aircraft with two engines 30 provided on each wing 32. Each engine is provided with a main gearbox 34 which drives ancillary equipment 36 and two engine driven pumps 10 via respective clutch arrangements 14. For clarity, just the outlet line of each pump is shown. Each of the clutch arrangements is controlled remotely from the cockpit via a switch 40. The switch could be pilot-operated eg a simple mechanical or touch screen switch etc or it could be controlled automatically.

This arrangement allows the pilot selectively to disengage one or more of the engine driven pumps. Actuation of the clutches may be done manually by the pilot or under the control of a hydraulic management system (not shown).

In normal operation, the engine driven pumps may be disengaged from the engine during start up so that the usual torque generated by the pumps is offloaded from the engine, making it easier to start. Following start up of the engines the clutches are switched ON either manually by the pilot or by automated sequence so that all the hydraulic pumps are driven during takeoff and until after the high hydraulic demands for raising the undercarriage and flap retraction have passed. During cruise flight one or more of the engine driven pumps may be disengaged and left non-operational for the majority of the flight until the final descent and landing when there is again a period of high hydraulic demand.

In this way, the engine driven pumps may be taken out of operation for the majority of the flight so that these flying hours do not contribute to the service interval. The engine driven pumps that are disconnected may be rotated so that the actual accumulated operational hours of each of the pumps is approximately equal, so that the service interval or the suite of pumps as a whole is considerably increased. The selection and rotation of the non-operational pumps may be done either manually or through a hydraulic management system.

## Claims

1. An aircraft, including :-
an aircraft power plant (30);
at least two engine driven pumps (10) for being driven by said power plant;
respective clutch arrangements (14) associated with each engine driven pump (10) and each selectively actuable to couple or uncouple the drive to the associated engine driven pump (10), and
a remote switch means (40) in the aircraft cockpit for allowing said clutch arrangements selectively to be engaged and disengaged during aircraft flight.

2. An aircraft according to claim 1, wherein the clutch arrangements (14) comprise mechanically operated clutch arrangements.

3. An aircraft according to claim 1, wherein the clutch arrangements (14) comprise mechanically operated clutch arrangements.

4. An aircraft according to any of the preceding claims, wherein each engine driven pump (10) is a variable displacement pump with the outlet thereof connected to an output port without a depressurising valve or blocking valve.

5. An aircraft power plant (30) including at least two engine driven pumps (10) for being driven by said power plant, respective clutch arrangements (14) associated with each engine driven pump and each selectively actuable to couple or uncouple the drive to the associate engine driven pump (14), and a remote switch means (40) for allowing selective engagement and disengagement of said clutch arrangements during aircraft flight.

6. A method for operating an aircraft which includes at least one power plant (30) with at least two engine driven pumps (10) for receiving power from said power plant via respective clutch arrangements (14), which method comprises operating said clutch arrangements (14) so that a given number of said engine driven pumps (10) is driven by said power plants during take off and landing and other conditions of high hydraulic demand, but disengaging at least one of said engine driven pumps (10) during cruise conditions or other conditions of lower hydraulic demand.
